# EUROPÄISCHE PATENTSCHRIFT

(11) **EP 3 390 860 B1**
(45) Veröffentlichungstag und Bekanntmachung des Hinweises auf die Patenterteilung: **24.02.2021**
(21) Anmeldenummer: 16770259.6
(22) Anmeldetag: 21.09.2016
(51) Int. Cl.: F16G 1/12, B65G 15/30, F16G 5/10, F16G 11/02, G01M 13/02

(54) **GURT ODER GURTSEGMENT**
BELT OR BELT SEGMENT
COURROIE OU SEGMENT DE COURROIE

(30) Priorität: 16.12.2015 DE 102015225425
(43) Veröffentlichungstag der Anmeldung: 24.10.2018
(73) Patentinhaber: ContiTech Transportbandsysteme GmbH, 30165 Hannover (DE)
(72) Erfinder: HÜLS, Achim, 30890 Barsinghausen (DE); MÖSCHEN-SIEKMANN, Michael, 37176 Nörten-Hardenberg (DE)
(74) Vertreter: Finger, Karsten
(86) Internationale Anmeldenummer: PCT/EP2016/072404
(87) Internationale Veröffentlichungsnummer: WO 2017/102121

(56) Entgegenhaltungen:
- WO-A1-2009/044117
- WO-A2-2008/024685
- DE-A1-102011 055 168
- GB-A- 2 406 844

## Beschreibung

### Gurt oder Gurtsegment

Die vorliegende Erfindung betrifft einen Gurt oder ein Gurtsegment gemäß dem Oberbegriff des Anspruchs 1.

Es sind seit langem Gurte oder Gurtsegmente bekannt, die zum Anheben oder Ziehen von Lasten verwendet werden. Hierzu können Gurte oder Gurtsegmente verwendet werden, die ein offenes Ende aufweisen, an dem die anzuhebende oder zu ziehende Last befestigt werden kann. Zu diesem Zweck wird herkömmlicherweise das offene Ende des Gurtes oder Gurtsegments um einen Teil oder Teilbereich der Last wie z.B. einen Haken oder dergleichen als Schlaufe geführt.

Die Ausbildung der Schlaufe oder auch Lasche erfolgt dabei üblicherweise derart, dass das offene Ende des Gurtes oder Gurtsegments um den Haken oder dergleichen umgeklappt wird, so dass das offene Ende auf einem Teilbereich des Gurtes oder Gurtsegments aufliegt und dort die beiden Bereiche durch eine Klemmung aufeinander gepresst werden. Hierdurch wird eine kraftschlüssige Verbindung erzeugt.

Derartige schlaufenartige geklemmte Gurtverbindungen können sich über die Zeit langsam lösen, indem das umgeklappte offene Ende zu wandern beginnt, bis es sich vollständig aus der Klemmung gelöst hat. Dann reißt der Gurt von der Last ab.

Um dieses üblicherweise langsam voranschreitenden Vorgang rechtzeitig zu erkennen, bevor es zu einem Abriss der Last kommt, ist es bei derartigen Gurtverbindungen üblich, diese regelmäßig z.B. durch eine Person zu inspizieren. Dabei kann das voranschreitende Wandern des umgeklappten offenen Endes z.B. dadurch zuverlässig erkannt werden, indem auf der Gurtoberfläche wenigstens eine Markierung vorgesehen wird, gegenüber der eine Relativbewegung in Gurtrichtung einfach und zuverlässig optisch erkannt werden kann. Hierdurch kann ein allmähliches Lösen der Gurtverbindung von einer Person erkannt und rechtzeitig z.B. ein Anhalten der Anwendung, ein Austausch des Gurtes oder eine Erneuerung der Klemmverbindung veranlasst werden.

Als alternative Gurtverbindung ist es aus der DE 10 2011 055 168 A1 bekannt, bei einem Gurt oder Gurtsegment mit im Wesentlichen in Längsrichtung des Gurtes oder Gurtsegments verlaufenden, im Wesentlichen parallel zueinander angeordneten Stahlseilen, an wenigstens einem offenen Ende eine Befestigungsvorrichtung anzuordnen, die mit zumindest einem Teil der Stahlseile mittels Klemmung verbunden ist. Hierzu können die Stahlseile in entsprechende Öffnungen der Befestigungsvorrichtung eingeführt und dort von außen verpresst werden, so dass eine kraftschlüssige Klemmverbindung zwischen der Befestigungsvorrichtung und den Stahlseilen hergestellt werden kann, welche 100% der Seilbruchlast übertragen kann.

Nachteilig ist hierbei, dass die zuvor beschriebene Überwachung der Qualität der Klemmverbindung eines umgeklappten offenen Endes eines Gurtes bei einer derartigen Klemmverbindung einer Befestigungsvorrichtung nicht angewendet werden kann, weil hier keine Relativbewegung des umgeklappten offenen Endes auf der Oberfläche des Gurtes stattfinden kann. Vielmehr tritt hier ein allmähliches Lösen der Gurtverbindung innerhalb der Befestigungsvorrichtung auf, indem die Enden der Stahlseile langsam aus den Öffnungen der Befestigungsvorrichtung rutschen. Dies ist über eine optische Markierung auf der Gurtoberfläche nicht von einer Person zu erkennen.

Eine Aufgabe der vorliegenden Erfindung ist es, einen Gurt oder ein Gurtsegment der eingangs beschriebenen Art bereit zu stellen, so dass ein Lösen einer Klemmverbindung einer Befestigungsvorrichtung erkannt werden kann. Insbesondere soll dies automatisch erkannt werden können. Zumindest soll eine Alternative zu bekannten Möglichkeiten geschaffen werden.

Die Aufgabe wird erfindungsgemäß durch einen Gurt oder durch ein Gurtsegment mit den Merkmalen gemäß Anspruch 1 gelöst. Vorteilhafte Weiterbildungen sind in den Unteransprüchen beschrieben.

Somit betrifft die vorliegende Erfindung einen Gurt oder ein Gurtsegment gemäß dem Oberbegriff des Anspruchs 1, welcher bzw. welches gekennzeichnet ist durch wenigstens eine Messeinrichtung, welche ausgebildet ist, einen Abstand in Längsrichtung zwischen dem Gurt oder dem Gurtsegment und der Befestigungsvorrichtung zu erfassen. Als Messeinrichtung kommen alle Arten von Sensoren in Frage, welche einen Abstand bzw. eine Entfernung erfassen können. Unter der Erfassung eines Abstands ist dabei auch die Erfassung einer Abstandsänderung zu verstehen, welche z.B. mittels eines Abrisssensors erfasst werden kann.

Hierbei liegt der vorliegenden Erfindung die Erkenntnis zugrunde, dass zur Überwachung bzw. Erkennung einer Relativbewegung der Verbindungspartner einer Klemmverbindung eine Messeinrichtung eingesetzt werden kann. Auf diese Weise kann eine automatische und kontinuierliche Überwachung erfolgen, so dass unzulässige Schwächungen der Klemmverbindung frühzeitig und sicher erkannt werden können. Auch können bereits geringste Veränderungen erkannt werden. Dies kann die Sicherheit der Anwendung eines Gurtes bzw. Gurtsegments mit geklemmter Befestigungsvorrichtung verbessern.

Gemäß der vorliegenden Erfindung weist die Messeinrichtung wenigstens eine Sensoreinheit, welche an der Befestigungsvorrichtung angeordnet ist, und wenigstens ein Sensorgegenstück auf, welches an dem Gurt bzw. Gurtsegment angeordnet ist, oder umgekehrt. Sind die Sensoreinheit und das Sensorgegenstück jeweils mit der Befestigungsvorrichtung bzw. dem Gurt oder Gurtsegment fest verbunden, kann jeweils zwischen Sensoreinheit und Befestigungsvorrichtung sowie zwischen Sensorgegenstück und Gurt bzw. Gurtsegment keine Relativbewegung auftreten. Wird daher ein Abstand bzw. eine Abstandsänderung erfasst, welcher bzw. welche z.B. einen vorbestimmten Grenzwert überschreitet, so kann hierdurch eine Relativbewegung der Befestigungsvorrichtung gegenüber dem Gurt oder Gurtsegment erkannt und damit auf eine Schwächung der Klemmverbindung geschlossen werden.

Dabei können die Sensoreinheit auf der Befestigungsvorrichtung und das Sensorgegenstück auf dem Gurt oder Gurtsegment angeordnet sein oder die Sensoreinheit kann auf dem Gurt oder Gurtsegment und das Sensorgegenstück auf der Befestigungsvorrichtung angeordnet sein.

Gemäß einem weiteren Aspekt der vorliegenden Erfindung ist die Sensoreinheit ein elektrisch messender Sensor, insbesondere ein Wirbelstromsensor, und das Sensorgegenstück ist ein elektrisch leitfähiger Körper, insbesondere ein metallischer Körper. Auf diese Weise kann eine berührungslose Erfassung des Abstand bzw. einer Abstandsänderung über eine induktive Messung erfolgen. Diese Art der Messung kann sehr robust gegenüber Verschmutzungen wie z.B. Staub und dergleichen sein, so dass sie für entsprechende Anwendungen, bei denen mit verschmutzenden Umwelteinflüssen zu rechnen ist, sehr geeignet sein kann.

Gemäß einem weiteren Aspekt der vorliegenden Erfindung ist die Sensoreinheit ein taktiler Sensor und das Sensorgegenstück ist ein starrer oder nachgiebiger Körper. Auch auf diese Art und Weise kann eine Abstandserfassung bzw. die Erfassung einer Abstandsänderung erfolgen. Hierbei ist das Sensorgegenstück, starr oder nachgiebig, derart auszugestalten bzw. anzuordnen, dass z.B. bei der Beendigung des taktilen Kontakts ein vorbestimmter Abstand bzw. eine vorbestimmte kritische Abstandsänderung erreicht ist, bei dem bzw. bei der ein vorbestimmter kritischer Abstandswert bzw. Abstandsänderungswert überschritten wird.

Gemäß einem weiteren Aspekt der vorliegenden Erfindung ist die Sensoreinheit ein optischer Sensor und das Sensorgegenstück ist ein optisch reflektierender Körper. Auch auf diese Art und Weise kann eine Abstandserfassung bzw. die Erfassung einer Abstandsänderung erfolgen. Beispielsweise kann hierzu eine Abstands- bzw. Entfernungsmessung mittels eines Lasers eingesetzt werden.

Gemäß einem weiteren Aspekt der vorliegenden Erfindung ist die Sensoreinheit ein Abrisssensor, welcher mit einem Gegenstück in Längsrichtung abreißbar verbunden ist. Auch auf diese Art und Weise kann eine Abstandserfassung bzw. die Erfassung einer Abstandsänderung erfolgen. Ein Abrisssensor kann dadurch wirken, dass eine Unterbrechung eines Stromkreises durch eine Längenänderung bzw. Relativbewegung bewirkt und erfasst werden kann.

Gemäß einem weiteren Aspekt der vorliegenden Erfindung ist die Messeinrichtung, insbesondere eine mit der Sensoreinheit signalübertragend verbundene Rechnereinheit der Messeinrichtung, ausgebildet, ein vorbestimmtes Signal auszugeben, falls der erfasste Abstand einen vorbestimmten Grenzwert überschreitet. Auf diese Weise kann eine Reaktion auf die Erfassung eines vorbestimmten Abstands bzw. einer vorbestimmten Abstandsänderung erfolgen. Beispielsweise kann ein Warnsignal ausgegeben bzw. veranlasst werden, welches z.B. eine persönliche Inspektion der Klemmverbindung durch eine Person bewirken kann. Auch kann durch ein Signal die Anwendung angehalten bzw. stillgelegt werden, um Sicherheitsrisiken zu vermeiden. Es können auch alternativ oder zusätzlich optische und bzw. oder akustische Warnsignale ausgegeben werden, um vor den Sicherheitsrisiken zu warnen.

Gemäß einem weiteren Aspekt der vorliegenden Erfindung weist der Gurt oder das Gurtsegment im Wesentlichen einen elastomeren Werkstoff auf, in den die Stahlseile als Festigkeitsträger eingebettet sind. Hierdurch kann ein flexibler Gurt bzw. ein flexibles Gurtsegment bereitgestellt werden.

Gemäß einem weiteren Aspekt der vorliegenden Erfindung weist die Klemmvorrichtung eine Mehrzahl von Öffnungen auf, in die die Stahlseile eingeführt und dort eingeklemmt sind. Hierdurch kann die Verbindung der Befestigungsvorrichtung an dem Gurt oder Gurtsegment verbessert werden. Auch kann eine gleichmäßigere Kraftübertragung zwischen den Stahlseilen des Gurtes oder des Gurtsegments und der Befestigungsvorrichtung erreicht werden. In beiden Fällen kann die Haltbarkeit der Klemmverbindung verbessert werden.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines Gurtes oder Gurtsegments mit geklemmter Befestigungsvorrichtung und erfindungsgemäßer Messeinrichtung; und
- Fig. 2: eine seitliche schematische Darstellung der Fig. 1.

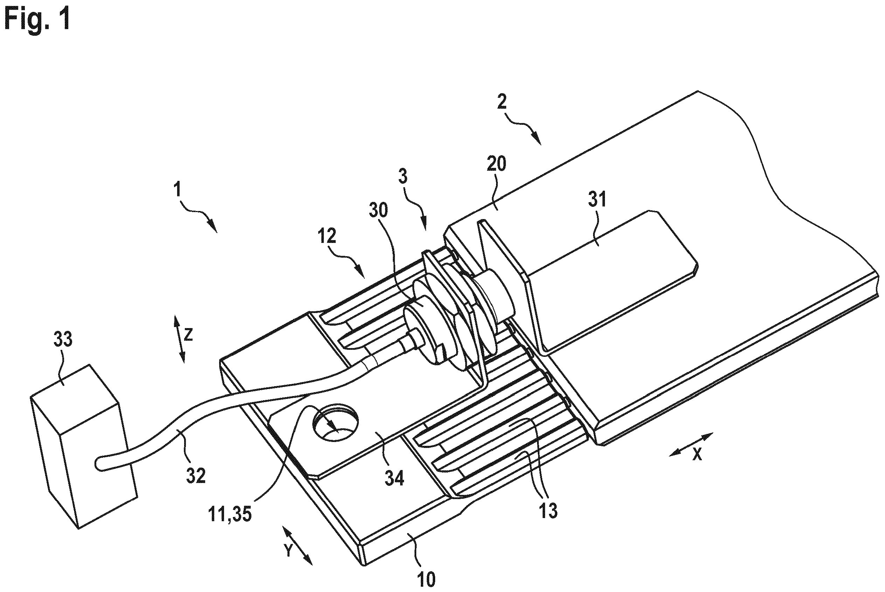

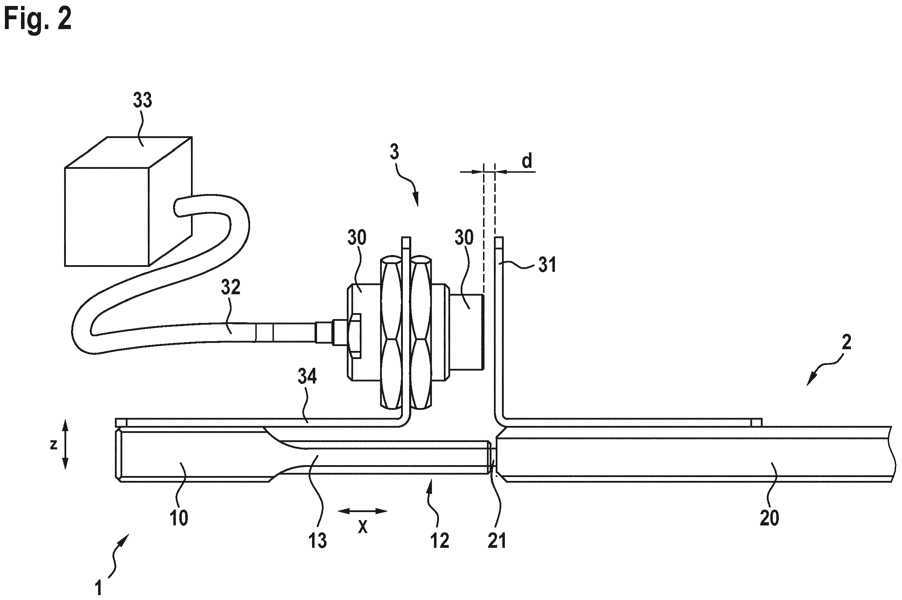

Fig. 1 zeigt eine perspektivische schematische Darstellung eines Gurtes 2 oder Gurtsegments 2 mit geklemmter Befestigungsvorrichtung 1 und erfindungsgemäßer Messeinrichtung 3. Fig. 2 zeigt eine seitliche schematische Darstellung der Fig. 1.

Die Befestigungsvorrichtung 1 sowie der Gurt 2 bzw. das Gurtsegment 2 erstrecken sich im Wesentlichen in einer Längsrichtung X, welche auch als Länge X bezeichnet werden kann. Hierzu senkrecht erstreckt sich eine Querrichtung Y, welche auch als Breite Y bezeichnet werden. Zu diesen beiden Richtungen X, Y erstreckt sich eine senkrechte Richtung Z, die auch als Höhe Z oder Dicke Z bezeichnet werden kann.

Die Befestigungsvorrichtung 1 weist einen ersten Teilbereich 10 auf, der auch als Kopfstück 10 der Befestigungsvorrichtung 1 bezeichnet werden kann. Das Kopfstück 10 ist mit einem zweiten Teilbereich 12 verbunden, der auch als Klemmstück 12 der Befestigungsvorrichtung 1 bezeichnet werden kann. Das Kopfstück 10 und das Klemmstück 12 sind derart miteinander verbunden und ausgestaltet, dass sie sicher die Kräfte zwischen einer Last und einem Gurt 2 oder Gurtsegment 2 übertragen können. Im vorliegenden Ausführungsbeispiel sind das Kopfstück 10 und das Klemmstück 12 aus Stahl und einteilig, d.h. massiv aus einem Körper gefertigt, vorgesehen.

Das Kopfstück 10 weist ein Verbindungselement 11 auf, welches z.B. ein Haken oder dergleichen sein kann. In der dargestellten Ausführungsform ist das Verbindungselement 11 eine Aussparung 11, welche senkrecht zur Längsrichtung X des Gurtes 2 bzw. Gurtsegments 2 und senkrecht zur Ebene des Gurtes 2 bzw. Gurtsegments 2 verläuft. Mittels dieser Aussparung 11, die auch als Öffnung 11 oder Durchgangsbohrung 11 bezeichnet werden kann, kann das Kopfstück 10 der Befestigungsvorrichtung 1 in einen Haken oder einen Vorsprung einer Last oder auch Halterung eingehängt oder auch an einer Last oder Halterung angeschraubt werden.

Das Klemmstück 12 weist eine Klemmvorrichtung 13 auf, die in dem dargestellten Ausführungsbeispiel aus einer Mehrzahl von Klemmstegen 13 besteht, die jeweils in ihrem Inneren wenigstens eine in Längsrichtung X verlaufende Öffnung in Form einer Längsbohrung aufweisen (nicht dargestellt). In den Längsbohrungen werden die Stahlseile 21 des Gurtes 2 bzw. Gurtsegments 2 geklemmt gehalten. Hierzu wurde auf die Klemmstege 13 von außen ein Kraft ausgeübt, so dass sich der Durchmesser bzw. Querschnitt der Längsbohrungen der Klemmstege 13 derartig verengt hat, dass eine kraftschlüssige Klemmverbindung zwischen dem Inneren der Längsbohrungen und damit den Klemmstegen 13 und den Stahlseilen 21 hergestellt wurde, welche die Last des Verbindungselements 11 tragen kann. Innerhalb des Gurtes 2 bzw. des Gurtsegments 2 sind die Stahlseile 21 in dessen elastomeren Gurtkörper 20 eingebettet.

Um nun erfindungsgemäß die Haltbarkeit der kraftschlüssigen Klemmverbindung der Stahlseile 21 in den Längsbohrungen der Klemmstege 13 zu überwachen, ist eine Messeinrichtung 3 vorgesehen. Die Messeinrichtung 3 weist eine Sensoreinheit 30 in Form eines Wirbelstromsensors 30 auf, welcher auf der Befestigungsvorrichtung 1 angeordnet und in Längsrichtung X zum Gurt 2 bzw. zum Gurtsegment 2 hin ausgerichtet ist. Die Messeinrichtung 3 weist ferner ein Sensorgegenstück 31 in Form eines metallischen Körpers 31 auf, welcher rechtwinkelig umgebogen auf der Oberfläche des Gurtes 2 bzw. Gurtsegments 2 angeordnet ist. Der metallische Körper 31 ist mit seiner hochgebogenen Fläche zum Wirbelstromsensor 30 in Längsrichtung X hin ausgerichtet und in einem vorbestimmten Abstand d angeordnet.

Der Wirbelstromsensor 30 ist mittels einer ebenfalls hochgebogenen Halterung 34 an der Befestigungsvorrichtung 1 angeordnet. Hierzu weist die Halterung 34 eine Aussparung 35 auf, welche mit der Aussparung 11 des Kopfstücks 10 in Deckung gebracht werden kann, so dass der Wirbelstromsensor 30 mittels seiner Halterung 34 gemeinsam mit der zu handhabenden Last an der Befestigungsvorrichtung 1 angeordnet und z.B. festgeschraubt werden kann.

Der Wirbelstromsensor 30 ist mittels einer Signalübertragungsleitung 32 signalübertragend mit einer Rechnereinheit 33 der Messeinrichtung 3 verbunden. Mittels der Rechnereinheit 33 kann der erfasste Abstand d ausgewertet werden. Hierdurch ist es möglich, den erfassten Abstand d mit einem vorbestimmten Grenzwert zu vergleichen. Alternativ kann aus dem aktuell erfassten Abstand d und dem vorherigen erfassten Abstand d eine Abstandsdifferenz bestimmt und diese mit einem vorbestimmten Grenzwert verglichen werden. Auf jeden Fall kann auf diese Art und Weise eine automatisierte und kontinuierliche Überwachung der Haltbarkeit der Klemmverbindung erfolgen, so dass eine sich lösende Klemmverbindung frühzeitig erkannt werden kann. In Reaktion hierauf können Maßnahmen eingeleitet werden, um z.B. Benutzer zu warnen, diese von einer Nutzung der Anwendung abzuhalten bzw. eine Inspektion oder auch Instandsetzung der Klemmverbindung durch Personen einzuleiten.

### Bezugszeichenliste

### (Teil der Beschreibung)

- d: gemessener Abstand in Längsrichtung X zwischen Sensoreinheit 30 und Sensorgegenstück 31
- X: Längsrichtung, Länge
- Y: Querrichtung, Breite
- Z: senkrechte Richtung, Höhe, Dicke

- 1: Befestigungsvorrichtung
- 10: erster Teilbereich bzw. Kopfstück der Befestigungsvorrichtung 1
- 11: Verbindungselement bzw. Aussparung des Kopfstücks 10
- 12: zweiter Teilbereich bzw. Klemmstück der Befestigungsvorrichtung 1
- 13: Klemmvorrichtung bzw. Klemmstege des Klemmstücks 12

- 2: Gurt, Gurtsegment
- 20: Gurtkörper, Gurtsegmentkörper
- 21: Stahlseile

- 3: Messeinrichtung
- 30: Sensoreinheit, Wirbelstromsensor, taktiler Sensor, optischer Sensor
- 31: Sensorgegenstück, metallischer Körper, starrer Körper, reflektierender Körper
- 32: Signalübertragungsleitung der Sensoreinheit 30 zur Rechnereinheit 33
- 33: Rechnereinheit
- 34: Halterung der Sensoreinheit 30
- 35: Aussparung der Halterung 34

## Patentansprüche

1. Gurt (2) oder Gurtsegment (2), mit
im Wesentlichen in Längsrichtung des Gurtes (2) oder Gurtsegments (2) verlaufenden, im Wesentlichen parallel zueinander angeordneten Stahlseilen (21), wobei der Gurt (2) oder das Gurtsegment (2) wenigstens ein offenes Ende mit einer Befestigungsvorrichtung (1) aufweist, die mit zumindest einem Teil der Stahlseile (21) mittels Klemmung verbunden ist, und mit
wenigstens einer Messeinrichtung (3), welche ausgebildet ist, einen Abstand (d) in Längsrichtung (X) zwischen dem Gurt (2) oder dem Gurtsegment (2) und der Befestigungsvorrichtung (1) zu erfassen,
**dadurch gekennzeichnet, dass**
die Messeinrichtung (3) wenigstens eine Sensoreinheit (30), welche an der Befestigungsvorrichtung (1) angeordnet ist, und wenigstens ein Sensorgegenstück (31) aufweist, welches an dem Gurt (2) bzw. Gurtsegment (2) angeordnet ist, oder umgekehrt.

2. Gurt (2) oder Gurtsegment (2) nach Anspruch 1,
wobei die Sensoreinheit (30) ein elektrisch messender Sensor (30), insbesondere ein Wirbelstromsensor (30), und das Sensorgegenstück (31) ein elektrisch leitfähiger Körper (31), insbesondere ein metallischer Körper (31), ist.

3. Gurt (2) oder Gurtsegment (2) nach Anspruch 1,
wobei die Sensoreinheit (30) ein taktiler Sensor (30) und das Sensorgegenstück (31) ein starrer oder nachgiebiger Körper (31) ist.

4. Gurt (2) oder Gurtsegment (2) nach Anspruch 1,
wobei die Sensoreinheit (30) ein optischer Sensor (30) und das Sensorgegenstück (31) ein optisch reflektierender Körper (31) ist.

5. Gurt (2) oder Gurtsegment (2) nach Anspruch 1,
wobei die Sensoreinheit (30) ein Abrisssensor (30) ist, welcher mit einem Gegenstück (31) in Längsrichtung (X) abreißbar verbunden ist.

6. Gurt (2) oder Gurtsegment (2) nach einem der vorherigen Ansprüche,
wobei die Messeinrichtung (3), insbesondere eine mit der Sensoreinheit (30) signalübertragend verbundene Rechnereinheit (33) der Messeinrichtung (3), ausgebildet ist, ein vorbestimmtes Signal auszugeben, falls der erfasste Abstand (d) einen vorbestimmten Grenzwert überschreitet.

7. Gurt (2) oder Gurtsegment (2) nach einem der vorherigen Ansprüche,
wobei der Gurt (2) oder das Gurtsegment (2) im Wesentlichen einen elastomeren Werkstoff (22) aufweist, in den die Stahlseile (21) als Festigkeitsträger eingebettet sind.

8. Gurt (2) oder Gurtsegment (2) nach einem der vorherigen Ansprüche,
wobei die Klemmvorrichtung (13) eine Mehrzahl von Öffnungen aufweist, in die die Stahlseile (21) eingeführt und dort eingeklemmt sind.

## Claims

1. Belt (2) or belt segment (2), having steel cables (21) that run substantially in a longitudinal direction of the belt (2) or belt segment (2) and are disposed so as to be substantially mutually parallel, wherein the belt (2) or the belt segment (2) has at least one open end having a fastening device (1) which by means of clamping is connected to at least one part of the steel cables (21), and having
at least one measuring installation (3), which is configured to detect a spacing (d) in the longitudinal direction (X) between the belt (2) or the belt segment (2) and the fastening device (1),
**characterized in that**
the measuring installation (3) has at least one sensor unit (30) which is disposed on the fastening device (1), and at least one sensor counter piece (31) which is disposed on the belt (2) or belt segment (2), respectively, or vice versa.

2. Belt (2) or belt segment (2) according to Claim 1,
wherein the sensor unit (30) is an electrically measuring sensor (30), in particular an eddy current sensor (30), and the sensor counter piece (31) is an electrically conductive body (31), in particular a metallic body (31).

3. Belt (2) or belt segment (2) according to Claim 1,
wherein the sensor unit (30) is a tactile sensor (30) and the sensor counter piece (31) is a rigid or yielding body (31).

4. Belt (2) or belt segment (2) according to Claim 1,
wherein the sensor unit (30) is an optical sensor (30) and the sensor counter piece (31) is an optically reflecting body (31).

5. Belt (2) or belt segment (2) according to Claim 1,
wherein the sensor unit (30) is a tear-away sensor (30) which in the longitudinal direction (X) is connected to a counter piece (31) so as to be capable of being torn away from the latter.

6. Belt (2) or belt segment (2) according to one of the preceding claims,
wherein the measuring installation (3), in particular a computer unit (33) of the measuring installation (3) that is connected in a signal-transmitting manner to the sensor unit (30), is configured to emit a predetermined signal should the spacing (d) detected exceed a predetermined limit value.

7. Belt (2) or belt segment (2) according to one of the preceding claims,
wherein the belt (2) or the belt segment (2) substantially has an elastomeric material (22) in which the steel cables (21) are embedded as strength members.

8. Belt (2) or belt segment (2) according to one of the preceding claims,
wherein the clamping device (13) has a plurality of openings into which the steel cables (21) are introduced and are clamped therein.

## Revendications

1. Courroie (2) ou segment de courroie (2), comprenant
des câbles d'acier (21) s'étendant principalement dans la direction longitudinale de la courroie (2) ou du segment de courroie (2), disposés principalement parallèlement les uns aux autres, la courroie (2) ou le segment de courroie (2) présentant au moins une extrémité ouverte avec un dispositif de fixation (1) qui est connecté à au moins une partie des câbles d'acier (21) par serrage, et comprenant
au moins un système de mesure (3) qui est réalisé pour détecter une distance (d) dans la direction longitudinale (X) entre la courroie (2) ou le segment de courroie (2) et le dispositif de fixation (1),
**caractérisé(e) en ce que**
le système de mesure (3) présente au moins une unité de capteur (30) qui est disposée au niveau du dispositif de fixation (1) et au moins une pièce conjuguée de capteur (31) qui est disposée au niveau de la courroie (2) ou du segment de courroie (2), ou inversement.

2. Courroie (2) ou segment de courroie (2) selon la revendication 1,
l'unité de capteur (30) étant un capteur à mesure électrique (30), en particulier un capteur à courants de Foucault (30), et la pièce conjuguée de capteur (31) étant un corps électriquement conducteur (31), en particulier un corps métallique (31).

3. Courroie (2) ou segment de courroie (2) selon la revendication 1,
l'unité de capteur (30) étant un capteur tactile (30) et la pièce conjuguée de capteur (31) étant un corps rigide ou flexible (31).

4. Courroie (2) ou segment de courroie (2) selon la revendication 1,
l'unité de capteur (30) étant un capteur optique (30) et la pièce conjuguée de capteur (31) étant un corps à réflexion optique (31).

5. Courroie (2) ou segment de courroie (2) selon la revendication 1,
l'unité de capteur (30) étant un capteur de rupture (30) qui est connecté de manière cassable dans la direction longitudinale (X) à une pièce conjuguée (31) .

6. Courroie (2) ou segment de courroie (2) selon l'une quelconque des revendications précédentes,
le système de mesure (3), en particulier une unité de calcul (33) du système de mesure (3) connectée par transmission de signaux à l'unité de capteur (30), étant réalisé pour émettre un signal prédéterminé au cas où la distance détectée (d) dépasse une valeur limite prédéterminée.

7. Courroie (2) ou segment de courroie (2) selon l'une quelconque des revendications précédentes,
la courroie (2) ou le segment de courroie (2) présentant principalement un matériau élastomère (22) dans lequel sont noyés les câbles d'acier (21) en tant que renforts.

8. Courroie (2) ou segment de courroie (2) selon l'une quelconque des revendications précédentes,
le dispositif de serrage (13) présentant une pluralité d'ouvertures dans lesquelles sont introduits et serrés les câbles d'acier (21).
